# EUROPÄISCHE PATENTANMELDUNG

(11) **EP 1 422 635 A1**
(43) Veröffentlichungstag der Anmeldung: **26.05.2004**
(21) Anmeldenummer: 02025941.2
(22) Anmeldetag: 20.11.2002
(51) Int. Cl.: G06F 17/30

(54) **Verfahren zum Erstellen einer Systemwissen auf dem Gebiet der Antriebstechnologie enthaltenden Datenbank**

(71) Anmelder: SIEMENS AKTIENGESELLSCHAFT, 80333 München (DE)
(72) Erfinder: Strömsdörfer, Christian, 90453 Nürnberg (DE); Wenzel-Teuber, Wendelin, 90762 Fürth (DE)

(57) **Zusammenfassung**

Die Erfindung betrifft ein Verfahren zum Erstellen einer Datenbank, bei welchem Daten, die Systemwissen auf dem Gebiet der Antriebstechnologie entsprechen, in Daten gemäß der MathML-Spezifiaktion umgewandelt werden und bei welchem die gemäß der MathML-Spezifikation vorliegenden Daten nichtflüchtig abgespeichert werden. Weiterhin betrifft die Erfindung eine Datenbank, in welcher Systemwissen auf dem Gebiet der Antriebstechnologie in Form von der MathML-Spezifikation entsprechenden Daten nichtflüchtig abgespeichert ist.

## Beschreibung

Die Erfindung betrifft ein Verfahren zum Erstellen einer Systemwissen auf dem Gebiet der Antriebstechnologie enthaltenden Datenbank.

Bei einer Auslegung von Antriebssystemen, welche Motoren und Antriebe mit Um- und Wechselrichtern enthalten, kommt eine Vielzahl von Regeln und Beziehungen zur Anwendung. Diese basieren insbesondere auf den technischen Eigenschaften der einzusetzenden Geräte.

Zu berücksichtigen sind dabei physikalische Eigenschaften und Zusammenhänge, die über Formeln, Messdaten, Kennlinien und andere Funktionen beschrieben werden können. Ein Beispiel dafür ist der Zusammenhang zwischen der Drehzahl und dem Drehmoment eines Motors. Weiterhin sind logische Zusammenhänge zu beachten. Zu diesen gehören Wenn-Dann-Beziehungen. Ein Beispiel dafür ist der Einsatz einer Netzkommutierungsdrossel, wenn die Leistung größer als ein Leistungsschwellenwert ist, der bei 500 kW liegt. Schließlich besteht oft die Notwendigkeit, Zusammenhänge als Bedingungen zu formulieren. Beispielsweise kann eine Bedingung darin bestehen, dass die Maximaldrehzahl eines Motors größer sein muss als die geforderte Lastdrehzahl.

Im Allgemeinen kommen bei der Beschreibung von Zusammenhängen zwischen Motoren, Antrieben und den geforderten Eigenschaften sowohl Formeln als auch logische Zusammenhänge als auch Bedingungen in komplexen Formulierungen vor. Dieses Wissen über die Zusammenhänge in der Antriebstechnologie stellt Systemwissen dar, da es sich dabei um Wissen über Systemzusammenhänge handelt. Im Unterschied zu diesem Systemwissen steht Konfigurationswissen, das sich lediglich auf den konkreten Aufbau einer Systemkomponente bezieht. Dieses Konfigurationswissen bildet aber eine Grundlage für das darauf aufbauende Systemwissen.

Systemwissen wird stets dann benötigt, wenn ein System entsprechend spezieller Kundenanforderungen konfiguriert werden muss. Beispielsweise hat ein Förderband für eine Abfüllablage von Mineralwasserflaschen andere Anforderungen als eine Lackierstraße in der Automobilindustrie. Systemwissen findet bislang vor allem Eingang bei Katalogen und Auslegungs- bzw. Konfigurationstools.

In Katalogen finden sich im wesentlichen umgangssprachliche Formulierungen für logische Beziehungen und Bedingungen, Formeln und tabellarische Darstellungen, beispielsweise für Messwerte. In Auslegungstools ist das Systemwissen im Programmcode hinterlegt. Dies entspricht einer festen Verankerung in der Software. Kataloge und Konfigurationstools beschränken sich stets auf ein bestimmtes Produktspektrum.

Technische Eigenschaften von Geräten wie beispielsweise die Maximaldrehzahl eines Motors oder der Bemessungsstrom werden häufig in herkömmlichen Datenbanken abgelegt.

Alle bisher bekannten Ansätze sind proprietärer Natur. Dabei werden stets manuelle Verfahren und/oder Software-Lösungen verwendet, die auf bestimmte Produkte oder auf bestimmte Auslegungsverfahren beschränkt und grundsätzlich nicht erweiterbar sind. Sollen neue Produkte oder neue Regeln aufgenommen werden, dann muss der jeweilige Katalog neu herausgegeben und die jeweilige Software neu kompiliert werden.

Dadurch ergibt sich eine Reihe von Problemen. So sind bisherige Auslegungsverfahren nicht miteinander vergleichbar. Dies ist insbesondere auch bei überlappenden Produktspektren nicht der Fall. Weiterhin sind bisherige Auslegungsverfahren nicht miteinander kombinierbar. Folglich ist es nicht möglich, komplexere Systeme durch eine Kombination von vorhandenen Systemen auszulegen. Weiterhin sind die den bisherigen Verfahren zugrundeliegenden Regeln arbiträr formuliert bzw. programmiert. Software-Algorithmen sind im Allgemeinen weder erschöpfend noch eindeutig. Ferner sind die jeweiligen Regeln nur für den Programmierer der Software lesbar und überprüfbar. Die Software ist von außen nicht einsehbar, sondern ausschließlich maschinenlesbar. Gleichartige Regeln werden von verschiedenen Programmierern unterschiedlich realisiert und müssen beim Einbringen von Änderungen getrennt weitergeführt werden. Eine Pflege von Systemwissen ist nur durch die Softwareentwickler bzw. die Katalogredakteure selbst möglich. Diese haben im Allgemeinen jedoch keine Spezialkenntnisse auf dem Gebiet der Antriebstechnologie.

Ausgehend von Katalogen und den Auslegungstools werden die vorstehend genannten Probleme in elektronische Verkaufsformen wie beispielsweise Mails weitergetragen.

Der Erfindung liegt die Aufgabe zugrunde einen Weg aufzuzeigen, wie die vorstehend geschilderten Nachteile vermieden werden können.

Diese Aufgabe wird durch ein Verfahren zum Erstellen einer Datenbank gelöst, wie es im Anspruch 1 angegeben ist. Vorteilhafte Ausgestaltungen und Weiterbildungen der Erfindung sind Gegenstand der abhängigen Ansprüche 2 - 8. Die Ansprüche 9 - 12 betreffen eine Datenbank.

Gemäß der Erfindung wird auf dem Gebiet der Antriebstechnologie vorhandenes Systemwissen in Daten gemäß der MathML-Spezifikation umgewandelt. Diese umgewandelten Daten werden nichtflüchtig in einer Datenbank abgespeichert. Dadurch wird für Systemwissen auf dem Gebiet der Antriebstechnologie eine eindeutige, formalisierte Beschreibungssprache geschaffen. Dabei wird davon Gebrauch gemacht, dass sich Systemwissen der Antriebstechnologie, welches Formeln, Tabellen, logische Beziehungen und Bedingungen aufweist, mathematisch formulieren lässt.

Die Vorteile der beanspruchten Lösung bestehen darin, dass Regeln über Antriebswissen eindeutig hinterlegt sind. Die hinterlegten Regeln sind miteinander vergleichbar. Jede Regel existiert nur ein einziges Mal. Die verschiedenen Regeln sind miteinander kombinierbar. Eine Erweiterung der hinterlegten Regeln ist ohne weiteres möglich. Die Regeln sind in gleicher Weise für beliebige Produktspektren formulierbar. Auch hochkomplexere Zusammenhänge lassen sich dadurch zerlegen und somit nachvollziehbar darlegen. Eine Pflege und Erweiterung der abgelegten Regeln kann durch Personen erfolgen, die Kenntnisse auf dem Gebiet der Antriebstechnologie haben, aber keine Softwareentwickler und auch keine Katalogredakteure sind. Das in der Datenbank abgespeicherte Wissen ist unabhängig von einer speziellen Verwendung formuliert und folglich vielseitig nutzbar. Es kann in Katalogen, in Softwarelösungen und auch via Internet genutzt werden.

Die Erfindung macht Gebrauch von einer standardisierten XML-Technologie, die unter dem Namen MathML bekannt geworden ist. Diese MathML-Spezifikation wurde geschaffen, um mathematische Beziehungen in XML verfügbar zu machen. Details dieser Spezifikation können unter der Internet-Adresse http://www.w3.org/TR/MathML2 abgerufen werden. Diese Spezifikation wird als Basis dafür verwendet, Systemwissen auf dem Gebiet der Antriebstechnologie zu beschreiben.

Vorzugsweise wird die an sich bekannte MathML-Spezifikation in geeigneter Weise erweitert, um Systemwissen auf dem Gebiet der Antriebstechnologie zu beschreiben. Beispielsweise umfasst die gemäß einer Weiterbildung der Erfidnung erweiterte MathML-Spezifikation auch Strings, die bei der standardisierten MathML-Spezifikation nicht vorgesehen sind. Strings sind dabei Zeichenketten, mit denen keine Rechenvorgänge vorgenommen werden. Derartige Zeichenketten können beispielsweise Bestellnummern, Produktnamen oder RAL-Farbtönen entsprechen.

Eine weitere vorteilhafte Weiterbildung der Erfindung besteht darin, eine erweiterte MathML-Spezifikation zu verwenden, die auch frei definierte Operatoren umfasst. Derartige Operatoren können Definitionsbereiche von Funktionen angeben. So lässt sich beispielsweise eine Regel angeben, gemäß welcher eine gegebene Funktion für alle Werte einer Variablen, die größer sind als ein gegebener Schwellenwert, nicht definiert ist.

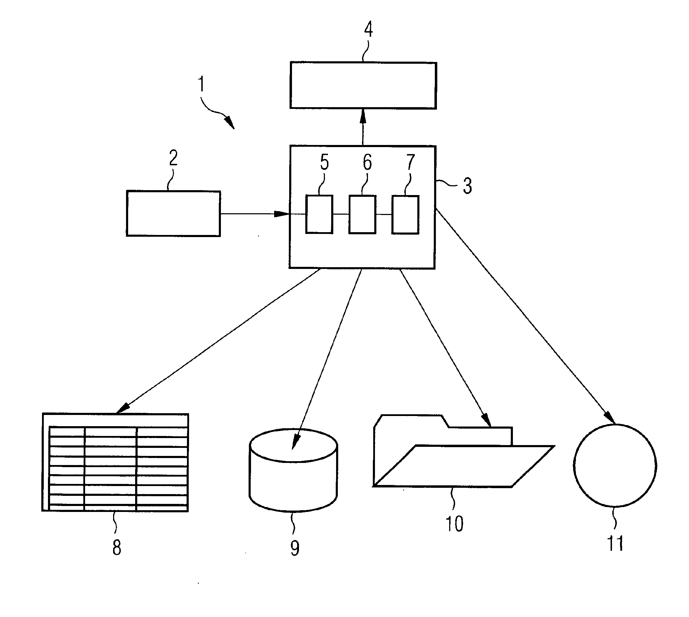

Weitere vorteilhafte Eigenschaften der Erfindung ergeben sich aus deren beispielhafter Erläuterung anhand der Figur. Diese zeigt ein Blockschaltbild zur Erläuterung des beanspruchten Verfahrens und zur Erläuterung der Nutzungsmöglichkeiten einer Datenbank gemäß der Erfindung.

In der Figur ist eine Computeranlage 1 dargestellt, zu welcher eine Dateneingabevorrichtung 2, eine Rechnereinheit 3 und ein Display 4 gehören. Die Dateneingabevorrichtung 2 ist ein Eingabegerät, eine Datenträgerleseeinheit oder ein Anschluss an ein Kommunikationsnetz, über welchen Daten empfangen werden können. Das Eingabegerät ist beispielsweise eine Tastatur, ein Spracheingabegerät oder eine Maus. Die Rechnereinheit 3 umfasst einen XML-Editor 5, einen Prozessor 6 und einen Speicher 7. Der Speicher 7 ist zur nichtflüchtigen Abspeicherung der die erfindungsgemäße Datenbank bildenden Daten vorgesehen.

Mittels der Dateneingabevorrichtung 2 werden Daten eingegeben, die Systemwissen auf dem Gebiet der Antriebstechnologie entsprechen. Zu diesen Daten gehören Formeln, Tabellen, logische Zusammenhänge und Bedingungen. Diese Daten können herkömmlichen Formelsammlungen oder druckschriftlichen Tabellen entnommen sein, auf individuellen Messungen und Berechnungen beruhen, Ergebnisse eigener Untersuchungen berücksichtigen und auch Konfigurationswissen umfassen, das im Rahmen bereits erstellter einzelner Systemkomponenten gewonnen wurde.

Beispielsweise enthalten die genannten Daten, die mittels der Dateneingabevorrichtung 2 eingegeben werden, Informationen über eine Formel, mittels der aus der Leistung das Lastmoment ermittelt wird. Ein anderes Beispiel für die genanten Daten ist die Festlegung einer Bedingung, gemäß welcher das Motorstillstandsdrehmoment größer sein muss als der Quotient aus einem berechneten Lastmoment und einem Faktor, der von der Höhenlage eines aufgestellten Motors abhängig ist.

Die mittels der Dateneingabevorrichtung 2 eingegebenen Daten werden an die Rechnereinheit 3 weitergeleitet und in dieser dem XML-Editor 5 zugeführt. In diesem XML-Editor erfolgt eine Umwandlung der eingegeben Daten in Daten gemäß der MathML-Spezifikation. In dieser MathML-Spezifikation liegen die Daten in sogenannten Tags vor, wobei die eigentliche Information, die beispielsweise einer Formel entspricht, zwischen einem Start-Tag und einem End-Tag angeordnet ist.

Nachfolgend werden Beispiele angegeben, bei welchen Daten, die Systemwissen auf dem Gebiet der Antriebstechnologie entsprechen, umgewandelt wurden in Daten gemäß der MathML-Spezifikation.

Gemäß einem ersten Beispiel wird das Lastmoment aus der Leistung berechnet. Die bei diesem Beispiel gezeigten <cn>-Elemente mit name-Attributen, die sich auf existierende Werte im Zuge einer Auslegung beziehen, entsprechen einer Erweiterung der MathML-Spezifikation. Weiterhin ist ein szrule-Element vorgesehen, das als äußere Klammer für die dargestellte Regel dient. Die Regel lautet wie folgt:

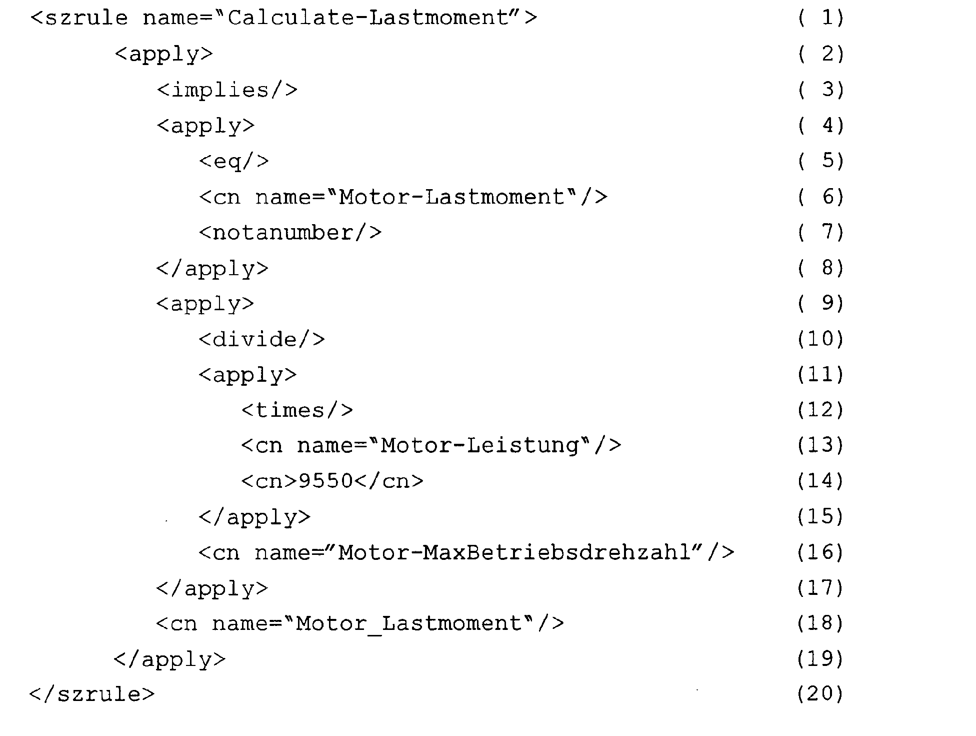

Der Ausdruck (1) gibt an, dass eine Regel vorliegt, deren Darstellung hier beginnt und gemäß welcher das Lastmoment berechnet wird. Der Ausdruck (2) entspricht dem Öffnen einer Klammer. Der Ausdruck (3) entspricht einem Wenn-Dann-Operator. Der Ausdruck (4) entspricht dem Öffnen einer weitern Klammer. Die Ausdrücke (5), (6) und (7) besagen in Verbindung mit dem Ausdruck (3): "Wenn das Motorlastmoment bisher nicht berechnet wurde". Der Ausdruck (8) entspricht dem Schließen einer Klammer. Der Ausdruck (9) entspricht dem erneuten Öffnen einer Klammer. Die Ausdrücke (10) bis (17) besagen: "dann teile das Produkt aus Motorleistung und der Zahl 9550 durch die maximale Motor-Betriebsdrehzahl". Der Ausdruck (18) besagt: "ansonsten nehme das schon vorliegende Motorlastmoment". Der Ausdruck (19) entspricht dem Schließen der gemäß dem Ausdruck (2) geöffneten Klammer. Der Ausdruck (20) gibt an, dass die bei Ausdruck (1) beginnende Regel nunmehr beendet ist.

Gemäß einem zweiten Beispiel wird eine Bedingung festgelegt, gemäß welcher das Motorstillstandsdrehmoment größer sein muss als der Quotient aus dem oben berechneten Lastmoment und einem Faktor, der abhängig ist von der Höhenlage des Motors. Diese Regel lautet wie folgt:

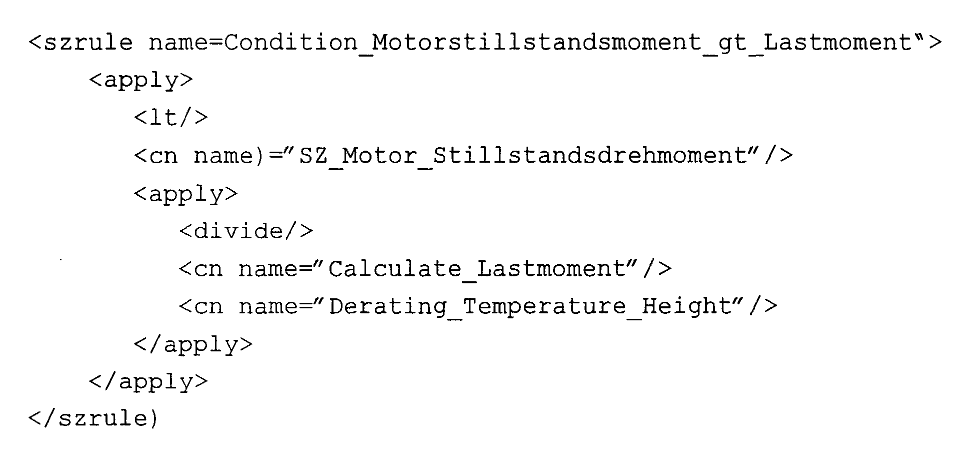

Die gemäß der MathML-Spezifikation vorliegenden Daten werden über den Prozessor 6 an den Speicher 7 weitergeleitet und dort zur Bildung einer Datenbank nichtflüchtig abgespeichert. Unter einer Datenbank wird dabei jede Art von persistenter Datenbasis verstanden, beispielsweise auch eine Datei in einer Verzeichnisstruktur oder Daten auf nicht beschreibbaren Medien wie einem Speicherbaustein, beispielweise einem EEPROM.

Vorzugsweise entsprechen die im Speicher 7 abgespeicherten Daten einer erweiterten MathML-Spezifikation, die auch Strings und frei definierte Operatoren umfasst. Dies erlaubt es, auch Daten in die Datenbank aufzunehmen, die beispielsweise einer Bestellnummer entsprechen, einen Produktnamen angeben oder einen bestimmten RAL-Farbton spezifizieren. Charakteristisch für derartige Strings ist, dass die jeweils vorliegende Zeichenkette keine Zahl ist, die im Rahmen eines Rechenvorganges verwendet werden soll. Die Möglichkeit, Operatoren zu definieren, erlaubt eine Vorgabe von Definitionsbereichen von Funktionen. Beispielsweise lässt sich angeben, dass eine vorliegende Funktion für alle Werte einer Variablen, die größer sind als ein Schwellenwert, nicht definiert ist.

Das in Form einer Datenbank im Speicher 7 abgelegte Systemwissen auf dem Gebiet der Antriebstechnologie kann in vielfältiger Weise verwendet werden. Beispielsweise kann ein bereits vorhandenes Auslegungstool 8 auf die Datenbank zugreifen. Weiterhin können der im Speicher 7 abgelegten Datenbank entnommene Daten in eine externe Datenbank 9 oder in einen Katalog 10 übernommen werden. Ferner können der im Speicher 7 abgelegten Datenbank entnommene Daten elektronisch im Sinne eines Mails an einen externen Computer 11 übertragen werden, der sich an einem beliebigen Ort befindet.

Nach alledem wird bei der Erfindung die MathML-Spezifikation als Basis benutzt, um Systemwissen auf dem Gebiet der Antriebstechnologie zu beschreiben. An bestimmten Stellen wird MathML erweitert, um den Anforderungen auf dem Gebiet der Antriebstechnologie besser gerecht zu werden. Andererseits besteht die Möglichkeit, bestimmte Teile der MathML-Spezifikation nicht zu berücksichtigen. Beispielsweise enthält die MathML-Spezifikation ein sogenanntes "Content Markup" und ein "Presentation Markup". Da das "Presentation Markup" der MathML-Spezifikation eine Vielzahl von Informationen enthält, die für eine Beschreibung des Systemwissens auf dem Gebiet der Antriebstechnologie nicht benötigt werden, können gegebenenfalls anstelle des genannten "Presentation Markup" andere bekannte Visualisierungsprogramme verwendet werden, beispielsweise EzMath oder WebIQ.

Im Gegensatz dazu kann es für eine visuelle Aufbereitung der Regeln beispielsweise für Kataloge auch bedeutsam sein, dass das für eine maschinelle Verarbeitung ausschließlich bedeutsame "Content Markup" beliebig durch ein "Presentation Markup" erweitert werden kann. Letzteres ermöglicht eine bis auf Post-Script-Niveau gehende Ausgestaltung der visuellen oder gar akustischen Darstellung. Somit ist diese spezielle Art von MathML für alle Medien geeignet, in denen Systemwissen benötigt wird.

Nach alledem wird durch die Erfindung eine Beschreibungssprache für Systemwissen in der Antriebstechnologie geschaffen. Zu diesem Zweck wurde nicht eigens eine neue Spezifikation kreiert, die selbst wiederum proprietär und schwer erweiterbar wäre, sondern ein weltweiter Standard genutzt und an die speziellen Bedürfnisse auf dem Gebiet der Antriebstechnologie angepasst.

Durch die Verwendung von XML ist die Beschreibungssprache für Antriebswissen sowohl von Menschen lesbar als auch maschinenlesbar. Dies erleichtert die Pflege der Datenbank enorm. Diese Pflege kann insbesondere unter Zuhilfenahme von einem der zahlreichen bekannten XML-Editoren auch von Personen vorgenommen werden, die weder XML- noch Software-Spezialisten sein müssen. Weiterhin ist zu jedem Zeitpunkt eine elektronische Verarbeitbarkeit des Systemwissens gewährleistet. An der Schnittstelle zwischen Mensch und Maschine ist keine Übersetzung nötig.

Schließlich können die Regeln ebenso wie technische Details als Text in Datenbanken abgelegt werden. Das gesamte Wissen über Antriebe kann damit über eine einheitliche Datenverwaltung gehandhabt werden.

Insbesondere ist es wegen der Universalität von XML - gerade auch im Internet - jederzeit erweiterbar und auch in elektronischen Vertriebsformen einsetzbar.

## Patentansprüche

1. Verfahren zum Erstellen einer Datenbank, bei welchem Daten, die Systemwissen auf dem Gebiet der Antriebstechnologie entsprechen, in Daten gemäß der MathML-Spezifikation umgewandelt werden und bei welchem die gemäß der MathML-Spezifikation vorliegenden Daten nichtflüchtig abgespeichert werden.

2. Verfahren nach Anspruch 1,
**dadurch gekennzeichnet, dass**
die Systemwissen auf dem Gebiet der Antriebstechnologie entsprechenden Daten Formeln, Tabellen, logische Zusammenhänge und Bedingungen umfassen.

3. Verfahren nach Anspruch 1 oder 2,
**dadurch gekennzeichnet, dass**
die Systemwissen auf dem Gebiet der Antriebstechnologie entsprechenden Daten in einen Computer eingegeben und mittels eines XML-Editors in Daten gemäß der MathML-Spezifikation umgewandelt werden.

4. Verfahren nach Anspruch 3,
**dadurch gekennzeichnet, dass**
die Eingabe der Daten in den Computer mittels eines Eingabegerätes vorgenommen wird.

5. Verfahren nach Anspruch 3 oder 4,
**dadurch gekennzeichnet, dass**
die Eingabe der Daten in den Computer mittels eines Datenträgers vorgenommen wird.

6. Verfahren nach einem der Ansprüche 3 - 5,
**dadurch gekennzeichnet, dass**
die Eingabe der Daten in den Computer über ein Telekommunikationsnetz vorgenommen wird.

7. Verfahren nach einem der vorhergehenden Ansprüche,
**dadurch gekennzeichnet, dass**
die Systemwissen auf dem Gebiet der Antriebstechnologie entsprechenden Daten in Daten gemäß einer erweiterten MathML-Spezifikation umgewandelt werden, die auch Strings umfasst.

8. Verfahren nach einem der vorhergehenden Ansprüche,
**dadurch gekennzeichnet, dass**
die Systemwissen auf dem Gebiet der Antriebstechnologie entsprechenden Daten in Daten gemäß einer erweiterten MathML-Spezifikation umgewandelt werden, die auch frei definierte Operatoren umfasst.

9. Datenbank, in welcher Systemwissen auf dem Gebiet der Antriebstechnologie in Form von der MathML-Spezifikation entsprechenden Daten nichtflüchtig abgespeichert ist.

10. Datenbank nach Anspruch 9,
**dadurch gekennzeichnet, dass**
die nichtflüchtig abgespeicherten Daten Formeln, Tabellen, logische Zusammenhänge und Bedingungen umfassen.

11. Datenbank nach Anspruch 9 oder 10,
**dadurch gekennzeichnet, dass**
die nichtflüchtig abgespeicherten Daten einer erweiterten MathML-Spezifikation entsprechen, die auch Strings umfasst.

12. Datenbank nach einem der Ansprüche 9 bis 11,
**dadurch gekennzeichnet, dass**
die nichtflüchtig abgespeicherten Daten einer erweiterten MathML-Spezifikation entsprechen, die auch frei defineirte Operatoren umfasst.
